# EUROPÄISCHE PATENTANMELDUNG

(11) **EP 1 946 811 A1**
(43) Veröffentlichungstag der Anmeldung: **23.07.2008**
(21) Anmeldenummer: 07116831.4
(22) Anmeldetag: 20.09.2007
(51) Int. Cl.: B01D 29/01, B01D 29/07, B01D 46/52

(54) **Filterelement**

(30) Priorität: 29.11.2006 DE 202006018187 U
(71) Anmelder: MANN+HUMMEL GmbH, 71638 Ludwigsburg (DE)
(72) Erfinder: Volkmer, Daniel, 84130, Dingolfing (DE); Meier, Jörg, 85716, Unterschleißheim (DE); Grad, Maximilian, 84163, Marklkofen (DE); Rackerseder, Johann, 84168, Aham (DE); Weindl, Markus, 84163, Steinberg (DE); Ammersdörfer, Micha, 84160, Frontenhausen (DE); Brenneis, Fritz, 84163 Marklkofen (DE)

(57) **Zusammenfassung**

Die Erfindung betrifft einen Filterelement (10), das dichtend in ein Filtergehäuse einsetzbar ist, mit einem Filtermedium (11) dessen mindestens eine Stirnseite von einer Verstärkungsklammer (12) eingefasst ist. An der Verstärkungsklammer (12) ist ein Dichtungselement (13) angeordnet. Die Verstärkungsklammer (12) und das Dichtungselement (13) bilden ein einziges Bauteil, wobei sich beispielsweise zwischen Verstärkungsklammer und Dichtungselement ein Filmscharnier (16) befindet.

## Beschreibung

### Technisches Gebiet

Die Erfindung bezieht sich auf einen Filtereinsatz, der dichtend in ein Filtergehäuse einsetzbar ist mit einem Filterelement, dessen mindestens eine Stirnseite von einer Verstärkungsklammer eingefasst ist, an welcher ein Dichtungselement angeordnet ist.

### Stand der Technik

In der DE 197 57 423 C1 wird ein Filtereinsatz beschrieben, der einen Faltenfilter umfasst, welcher in ein Filtergehäuse einsetzbar ist. Die Stirnseiten des Faltenfilters sind von formstabilisierenden, klammerförmigen Verstärkungselementen eingefasst, an denen einstückig eine Dichtung angeformt ist, die unter elastischer Spannung dichtend an die Gehäusewand des Filtergehäuses anlegbar ist. Für eine kostengünstige Herstellung sind das Verstärkungselement und die Dichtung zu einem gemeinsamen Bauteil zusammengefasst. Da das Verstärkungselement und die Dichtung aus dem gleichen Werkstoff bestehen und gewährleistet sein muss, dass die Dichtung unter elastische Vorspannung gesetzt werden kann, muss ein verhältnismäßig weicher und nachgiebiger Werkstoff gewählt werden. Andernfalls können die geforderten Dichtungseigenschaften nicht realisiert werden.

### Offenbarung der Erfindung

Der Erfindung liegt die Aufgabe zugrunde, mit einfachen konstruktiven Maßnahmen und in kostengünstiger Weise einen Filtereinsatz zu schaffen, der dichtend in ein Filtergehäuse einsetzbar ist. Gemäß eines weiteren Aspekts der Erfindung soll zweckmäßig sowohl eine radiale als auch eine axiale Abdichtung mit einfachen Mitteln zu bewerkstelligen sein.

Diese Aufgabe wird erfindungsgemäß mit den Merkmalen des Anspruchs 1 gelöst. Die Unteransprüche geben zweckmäßige Weiterbildungen an.

In vorteilhafter Weise ist der äußere Dichtabschnitt über ein Filmscharnier mit der Verstärkungsklammer verbunden. Dies bedeutet, dass eine Schwächung des Werkstoffes des Dichtungselements soweit vorgenommen wird, dass einerseits der äußere Dichtabschnitt eine gute Beweglichkeit aufweist, andererseits jedoch die federwirksamen Eigenschaften ausreichend sind, um eine gute Dichtwirkung zu erzielen.

In einer alternativen Ausgestaltung ist der Werkstoff von Dichtungselement und Verstärkungsklammer unterschiedlich. So ist die Verstärkungsklammer eine Hartkunststoffkomponente und der Dichtabschnitt eine Weichkunststoffkomponente. Beide Elemente sind im Zweikomponenten-Spritzgussverfahren hergestellt. In einer Ausgestaltung von Verstärkungsklammer und Dichtabschnitt kann beim Übergang zwischen Hartkunststoffkomponente und Weichkunststoffkomponente eine Sollbiegestelle angeordnet sein, beispielsweise in Gestaltung eines Filmscharniers. Die Verstärkungsklammer ist vorteilhafterweise an der Stirnseite oder der letzten Faltseite des Filterelements mit dieser verklebt oder verschweißt. Das Filterelement kann an beiden sich gegenüberliegenden Stirnseiten mit einer Verstärkungsklammer und einem daran angeordnetem Dichtabschnitt eingefasst sein.

In einer weiteren vorteilhaften Ausgestaltung erstreckt sich die Verstärkungsklammer wenigstens partiell über zwei Falten eines zick-zack-förmig gefalteten Filterelements. So besteht die Möglichkeit, gerade am Randbereich die Verstärkungsklammer mit einem Steg auszugestalten, der eine gewisse Breite aufweist und sich bis über die zweite Falte des Filterelements erstreckt. Es wird auch ein Luftfiltersystem mit einem Luftfiltereinsatz vorgeschlagen, wobei dieses aus zwei Gehäuseteilen besteht, die miteinander öffenbar gekoppelt sind.

Diese und weitere Merkmale gehen nicht nur aus den Ansprüchen sondern auch aus der Beschreibung und den Zeichnungen hervor.

### Kurze Beschreibung der Zeichnungen

Es zeigt:

Fig. 1 eine perspektivische Ansicht eines Filtereinsatzes

Fig. 2 das Detail A) aus Figur 1 in einer ersten Variante

Fig. 3 das Detail A) der Figur 1 in einer zweiten Variante

Fig. 4 eine weitere perspektivische Ansicht eines Filtereinsatzes

Fig. 5 ein Luftfiltersystem mit einem Filtereinsatz

### Ausführungsform(en) der Erfindung

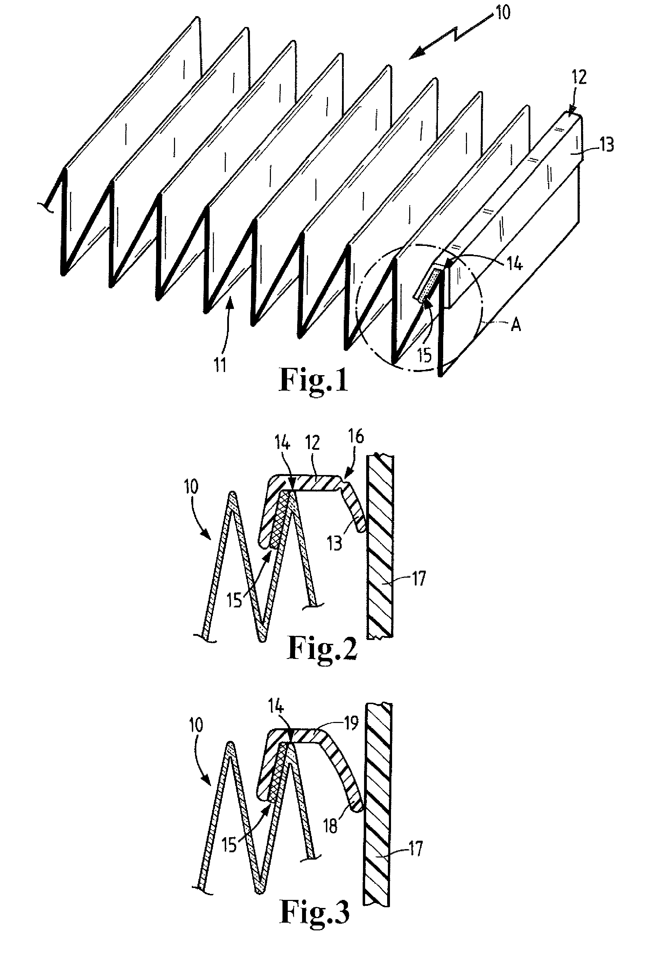

In Figur 1 ist ein Filtereinsatz 10 dargestellt, dieser besteht aus einem zick-zack-förmig gefaltetem Filtermedium 11 dessen Falten einen bestimmten, gleichmäßigen Abstand aufweisen. Am rechtsseitigen Ende des Filtereinsatzes 10 ist eine Verstärkungsklammer 12 vorgesehen mit einem Dichtungselement 13. Verstärkungsklammer 12 und Dichtungselement 13 bilden ein einziges Bauteil. Die Verstärkungsklammer 12 liegt auf der letzen Faltenspitze14 des Filtermediums 11 auf und ist dort beispielsweise mit einer Kleb- oder Schweißverbindung 15 mit dem Filtermedium verbunden, in bevorzugter Weise längs der gesamten Verstärkungsklammer 12.

In Figur 2 ist das Detail A) der Figur 1 näher dargestellt, gleiche Teile sind mit gleichen Bezugszeichen versehen. Die Verstärkungsklammer 12 ist an der Faltenspitze 14 mit einer Klebeverbindung 15 befestigt. In dieser Schnittdarstellung ist zu erkennen, dass zwischen der Verstärkungsklammer 12 und dem Dichtungselement 13 ein Filmscharnier 16 angeordnet ist. Das Material dieses Dichtungssystems ist beispielsweise ein Polyamid- oder Polypropylen-Werkstoff, welcher im Extrudierverfahren oder im Spritzgussverfahren hergestellt ist. Das Filmscharnier weist hervorragende elastische Eigenschaften auf, so dass das Dichtungselement sich gegen die hier nur schematisch angedeutete Anlagewand 17 anschmiegt und für eine Abdichtung zwischen der Anlagewand 17 und dem Dichtungselement 13 bzw. Filtereinsatz 10 sorgt.

In Figur 3 ist eine Variante des in Figur 2 dargestellten Systems gezeigt. Anstelle eines Filmscharniers zur Erzeugung der elastischen Eigenschaften zur Abdichtung des Filtereinsatzes besteht das Dichtungselement 18 aus einem Weichkunststoff, der mit einer Hartkunststoffkomponente 19, welche die Verstärkungsklammer bildet, verbunden ist. Auch hier können die beiden Kunststoffe in einem Extrudierverfahren hergestellt werden oder auch durch ein Zweikomponenten-Spritzgussverfahren. Es besteht ferner noch die Möglichkeit, das Dichtungselement 18 durch konstruktive Ausgestaltung wie z.B. die Bildung einer Dichtlippe am vorderen Ende mit einer zusätzlichen elastischen Komponente auszustatten (nicht dargestellt).

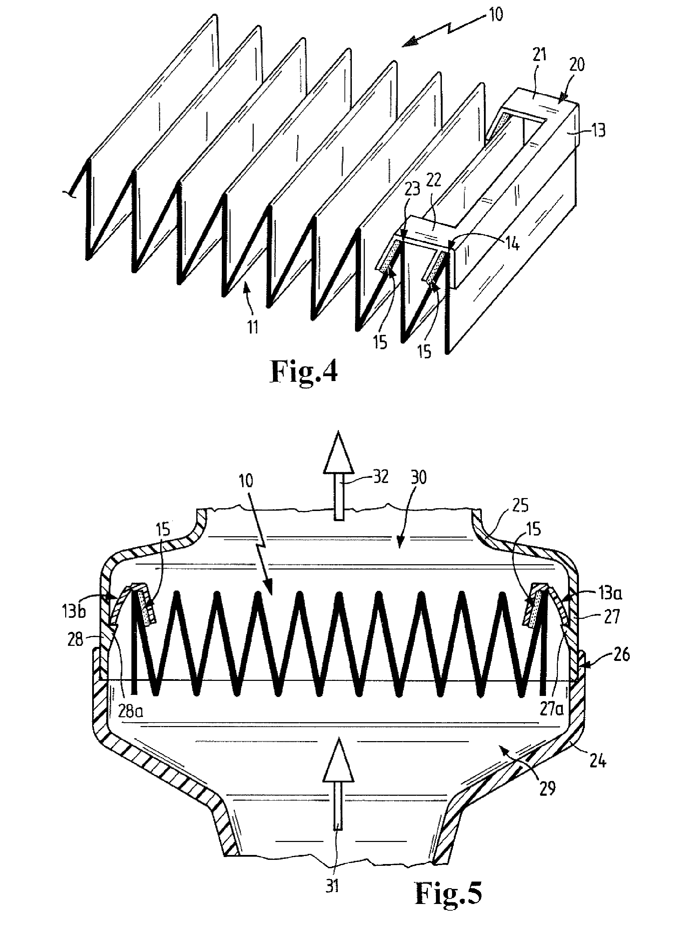

Figur 4 zeigt einen Filtereinsatz 10 mit einer Verstärkungsklammer 20, die wiederum ein Dichtungselement 13 aufweist. Die Verstärkungsklammer erstreckt sich nicht nur über die erste Faltenspitze 14 sondern in den Endbereichen mittels Stege 21, 22 auch über die zweite Faltenspitze 23, sowohl an der ersten Faltenspitze 14 als auch an der zweiten Faltenspitze 23 ist die Verstärkungsklammer 20 mit einer Klebeverbindung 15 ausgestattet. Selbstverständlich besteht die Möglichkeit, insbesondere an der Faltenspitze 14 über die gesamte Länge der Verstärkungsklammer nur eine punktuelle Verklebung vorzunehmen. Der Vorteil dieses Aufbaus besteht darin, dass ein Wegkippen der Verstärkungsklammer nicht möglich ist. Letztendlich führt der Aufbau zu einer zusätzlichen Stabilisierung des gesamten Dichtungssystems.

Figur 5 zeigt die Einbausituation eines Filtereinsatzes 10 in einem Luftfiltersystem. Dieses Luftfiltersystem besteht aus einem Unterteil 24 eines Gehäuses und einem Oberteil 25 eines Gehäuses. Beide Teile sind miteinander verrastet oder verschraubt und zwar im Verbindungsbereich 26. In das Oberteil 25 des Gehäuses ist ein Filtereinsatz 10 eingefügt, dieser liegt mit seinen Dichtungselementen 13a, 13b an den Seitenwänden 27, 28 des Oberteils 25 an - vorzugsweise an hakenförmigen Auflagen 27a, 28a - und sorgt in diesem Bereich für eine zuverlässige Abdichtung. An den weiteren Seiten des Filtereinsatzes können weitere Dichtungselemente, beispielsweise Schaumstoffdichtungen oder Vliesdichtungen vorgesehen sein, so dass eine zuverlässige Abdichtung zwischen dem Rohluftraum 29 und dem Reinluftraum 30 gewährleistet ist. Die zu reinigende Luft strömt gemäß dem Pfeil 31 in das System ein, durchströmt den zick-zack-förmig gefalteten Filtereinsatz 10 und verlässt gemäß dem Pfeil 32 gereinigt das Filtersystem. Der Filter kann beispielsweise zur Zuführung von Frischluft für den Innenraum eines Kraftfahrzeuges verwendet werden.

## Patentansprüche

1. Filtereinsatz, der dichtend in ein Filtergehäuse einsetzbar ist mit einem Filterelement, dessen mindestens eine Stirnseite von einer Verstärkungsklammer eingefasst ist, an der ein Dichtungselement angeordnet ist, **dadurch gekennzeichnet, dass** die Verstärkungsklammer und das Dichtungselement ein Bauteil ist und das Dichtungselement einen äußeren Dichtungsabschnitt aufweist, der mit der Verstärkungsklammer verbunden ist, wobei der äußere Dichtabschnitt beweglich an der Verstärkungsklammer gehalten ist.

2. Filtereinsatz nach Anspruch 1, **dadurch gekennzeichnet, dass** der äußere Dichtabschnitt über ein Filmscharnier mit der Verstärkungsklammer verbunden ist.

3. Filtereinsatz nach Anspruch 1 oder 2, **dadurch gekennzeichnet, dass** die Verstärkungsklammer eine Hartkunststoffkomponente und der Dichtabschnitt eine Weichkunststoffkomponente ist.

4. Filtereinsatz nach Anspruch 3, **dadurch gekennzeichnet, dass** sich an dem Übergang zwischen Hartkunststoffkomponente und Weichkunststoffkomponente eine Sollbiegestelle befindet.

5. Filtereinsatz nach einem der vorigen Ansprüche, **dadurch gekennzeichnet, dass** die Verstärkungsklammer an der Stirnseite mit dem Filterelement verklebt oder verschweißt ist.

6. Filtereinsatz nach einem der vorigen Ansprüche, **dadurch gekennzeichnet, dass** das Filterelement als Faltenfilter ausgeführt ist.

7. Filtereinsatz nach einem der vorigen Ansprüche, **dadurch gekennzeichnet, dass** zwei gegenüberliegende Stirnseiten des Filterelements von jeweils einer Verstärkungsklammer mit daran angeordnetem Dichtabschnitt eingefasst sind.

8. Filtereinsatz nach einem der vorigen Ansprüche, **dadurch gekennzeichnet, dass** die Verstärkungsklammer sich wenigstens partiell über zwei Falten eines zick-zack-förmig gefalteten Filterelements erstreckt.

9. Luftfiltersystem mit einem Filtereinsatz gemäß einem der Ansprüche 1-8 und einem Gehäuseteil zur Zuführung der zu reinigenden Luft in einem Gehäuseteil zur Abführung der gereinigten Luft, **dadurch gekennzeichnet, dass** die beiden Gehäuseteile miteinander öffenbar gekoppelt sind oder sich in einem oder beiden der Gehäuseteile eine Öffnung zum Einschieben oder Einführen des Filtereinsatzes befindet und wenigstens ein Dichtungsabschnitt an wenigstens einer Wandung eines der Gehäuseteile dichtend anliegt.
